# EUROPEAN PATENT SPECIFICATION

(11) **EP 4 451 843 B1**
(45) Date of publication and mention of the grant of the patent: **04.02.2026**
(21) Application number: 22843822.2
(22) Date of filing: 23.12.2022
(51) Int. Cl.: A01G 7/00, A01G 9/14, G01N 21/84, G01N 21/95, G01N 21/958

(54) **RHIZOTRON**
RHIZOTRON
RHIZOTRON

(30) Priority: 24.12.2021 BE 202106065
(43) Date of publication of application: 30.10.2024
(73) Proprietor: SMO bv, 9900 Eeklo (BE)
(72) Inventor: BONTE, Jan, 9900 Eeklo (BE)
(74) Representative: Brantsandpatents bv
(86) International application number: PCT/EP2022/087735
(87) International publication number: WO 2023/118569

(56) References cited:
- WO-A1-2021/082655
- CN-A- 112 595 367
- CN-B- 106 105 845
- DE-A1- 102011 118 619
- DE-A1- 102018 009 593

## Description

### FIELD OF THE INVENTION

The present invention relates to a device to a device for the development and observation of plants. In Particular, the present invention relates to a device for the development, storage and observation of plant roots.

### BACKGROUND

The study of plant roots requires reliable imaging to be carried out repeatedly and at specific times. Often, the numbers of plants to be monitored or cared for is quite substantial, therefore, time consuming.

CN112595367A discloses an automated method for rice root system monitoring using a robot. In this document, rice plants are grown in growth boxes equipped with glass plates, so as to permit the observation of the root systems of said rice plants. The growth boxes are stored in multiple rows, such that multiple corridors are formed between rows. Inspection of the plants in the boxes is carried out by a robot. The concept disclosed in this document requires that sufficient space is left between rows in order to allow the robot to access each growth box. This requires a large area in order to install and operate the system.

DE102018009593A1 discloses belt equipped with spacers for separating flat objects, such as glass panes and the like, on a load carrier. The system is configured to permit the removal or insertion of glass panes located in the last position of the load carrier. The system disadvantageously hinder direct access to each stored glass plate.

CN106105845B discloses a root window equipped with a movable filming apparatus. the root window disclosed in CN '845 is disadvantageously complex and not easily conducive to be easily stored, retrieved and/or moved.

The aim of the invention is to provide a method which eliminates those disadvantages. The invention thereto aims to provide a device and method which permit the storage, growth and study of plant root systems while requiring smaller area of operation.

### SUMMARY OF THE INVENTION

The present invention and embodiments thereof serve to provide a solution to one or more of above-mentioned disadvantages. To this end, the present invention relates to a device for storage, development and observation of plant roots according to claim 1.

Preferred embodiments of the device are shown in any of the claims 2 to 11.

In a second aspect, the present invention relates to a method according to claim 12.

In some embodiments, a method of manually operating the device of claim 1 comprised.

In some other embodiments, to a method for operation the device using a robot is related. Preferred embodiments of the method are shown in any of the claims 13 to 15.

The present invention discloses a device and method that advantageously permit storage, development and observation of plant roots, which device and method present low operational complexity. Furthermore, the disclosed device advantageously offers substantial plant storage capacity while requiring a smaller area.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**FIG. 1** shows the device for storage, development and observation of plant roots.
**FIG. 2** shows a top view of the device for storage, development and observation of plant roots equipped with a robot.
**FIG. 3** shows a side view of the device for storage, development and observation of plant roots equipped with a robot.
**FIG. 4** shows a first embodiment of a root plate .
**FIG. 5** shows a cross section of the first embodiment of a root plate .
**FIG. 6** shows a second embodiment of a root plate.
**FIG. 7** shows a cross section of the second embodiment of a root plate.
**FIG. 8** shows an embodiment of a root plate equipped with a plurality of laterally pivotable clamps in an open position.
**FIG. 9** shows an embodiment of a root plate equipped with a plurality of laterally pivotable clamps in an closed position.
**FIG. 10** shows an embodiment of a laterally pivotable clamp.
**FIG. 11** shows a detailed side view of a root plate equipped with a laterally pivotable clamp.

### DETAILED DESCRIPTION OF THE INVENTION

The present invention concerns a device for storage, development and observation of plant roots.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention defined by the appended claims, and form different embodiments, as would be understood by those in the art. For example, in the following claims, any of the claimed embodiments can be used in any combination. In a first aspect, the invention provides a device for storage, development and observation of plant roots comprising:
a. a first guide structure comprising a first and a second longitudinal guide elements, said first guide element being placed substantially parallel to said second guide element;
b. a plurality of movable shelves, each of said movable shelves having a substantially vertical first segment and a substantially horizontal second segment, said vertical segment being slidably connected to the first guide element, said second segment being slidably connected to the second guide element, and said second segment being further equipped with a plurality of longitudinally disposed support elements configured to accept and hold root plates;
c. a plurality of root plates configured to hold a volume of substrate and at least one plant ;
d. a third and fourth lower longitudinal guide elements located parallel to each other and to the first and second longitudinal guide elements, said third and fourth longitudinal guide elements being located at a lower level than said first and second longitudinal elements; and
e. an access platform having a first and second end, said first end being slidably connected to the third longitudinal guide element, and said second end being slidably connected to the fourth longitudinal guide element, said platform being configured to slide along the length of said third and second longitudinal guide elements, and further comprising a slidable platform configured to slide along the length of the access platform; characterized in that, the access platform is configured to laterally displace movable shelves in order to create access corridors next to any movable shelves, the slidable platform is further equipped with a robot configured move and scan root plates.

The access platform is configured to laterally displace movable shelves in order to create access corridors next to any movable shelves, the slidable platform is further equipped with robot configured move and scan root plates. This device advantageously permits storing a very large number of root plates while requiring a very reduced area. Furthermore, the device advantageously permits easy access to the root plates in order to store, analyze, retrieve and maintain the plants contained in said root plates. The use of a robot to move and scan root plates makes the operation of the device less time consuming and advantageously allows continuous operation of the device.

In a preferred embodiment of the invention, the first longitudinal guide element is located at a higher level than the second longitudinal element. In this way, access to the rows between the movable shelves is made easier still.

In a further or another embodiment, the access platform is driven. By preference, the access platform further comprises a driven slidable platform slidably connected to the access platform, said slidable platform being configured to slide in a direction parallel to any movable shelf in the device. In this way, access to each row of root plates is made easier. Furthermore, in this way it is possible to automate the movement of both the access platform and the slidable platform. This not only eliminates any access error but also permits continuous operation of the device.

In a further or another embodiment, the slidable platform is configured to allow operators to access root plates stored in any movable shelf in the device. This advantageously allows the operator to have easy access to the any movable shelf. This particularly advantageous for maintenance work. Furthermore, the risk of accidents is further reduces by the fact that none of the movable shelves are driven.

In a further or another embodiment of the invention, the support elements are oriented diagonally relative to both the horizontal plane and the longitudinal axis of the second segment of the movable shelf to which said support elements are rigidly attached. In this way, the root plates are also stored in an inclined position. By preference, the root plates are angled between 30 and 80 degrees relative to a horizontal plane. More preferably, the root plates are angled between 45 and 75 degrees relative to a horizontal plane. Yet more preferably, the root plates are angled between 70 and 55 degrees relative to a horizontal plane. This orientation of the root plates forces the roots of any plant contained in a root plate to grow against only one side of said root plate. This advantageously permits a better and much more complete visualization of the root structure of said plants.

In a further or another embodiment of the invention, each root plate comprises a box frame having an open top and front, a gasket placed around the perimeter of said open front, a transparent plate placed against the front side of said frame and bearing against said gasket, said transparent plate being configured to close the open front of the frame and create a cavity for substrate, and a plurality of fastening means bearing against the transparent plate and the frame. This permits easy disassembly and access to the substrate cavity of the root plate, which permits easier filling and easier maintenance of said root plate. Furthermore, the structure of the root plate has a more compact envelope, and therefore, advantageously permitting the storage of more root plates per unit of available area. Yet another advantage of the structure of the root plate is an advantageously enhanced visualization of the root structures of the plants contained in said root plate.

In a preferred embodiment of the invention, the back side of the cavity for substrate is detachable. More preferable still, the frame has a plurality of attachment positions configured to receive and retain the detachable back of the cavity for substrate. In this way, different substrate cavity depths are made possible. This advantageously permits the study of a broader range of plant cultivars to be developed and studied.

In an embodiment the fastening means are laterally pivotable clamps. Preferably, the laterally pivotable clamps rotate about an axis disposed to the frame. More preferably, said axis is located on the front side of the frame. In this way, said clamps remain attached to the frame whether they are in their open position or their closed position. This advantageously reduces the number of parts which must be handles in order while accessing the cavity of the plate.

In an embodiment, the laterally pivotable clamps have a laterally extending tab near the proximal end to the clamp. Said tab is configured to abut against the transparent plate when the clam is folded against the side of the frame, in this way locking said transparent plate against the frame. Preferably has a corner raised away from the frame of the root plate. In this way, said raised corner provided a camming effect while closing the laterally pivotable clamp towards the frame. this provides a firmer lock of the transparent plate against the frame.

In an embodiment, the laterally pivotable clamps have a "U"-shaped section near its distal end, the open channel of said section being directed in the same direction as the laterally extending tab. The "U"-shaped section is configured to reach both the front and back of the frame of the root plate, allowing the laterally pivotable clamp to rests flat against the side of the frame when in a closed position. By preference, the section of the clamp between the axis and the "U"-shaped section is curved or angled away from the transparent plate side of the frame.

Another aspect of the invention relates to method of scanning a root plate comprising the steps of:
a. Aligning an access platform with a movable shelf containing the root plate;
b. Creating an access corridor adjacent to said movable shelf;
c. Moving a slidable platform along the access platform until aligned with the root plate;
d. Retrieving the root plate;
e. Scanning the root plate;
f. Returning the root plate.

In a preferred embodiment of the access platform creates access corridors by pushing the movable shelves. This permits reducing operational complexity and maintenance costs.

In a further or another embodiment, the steps of retrieving, scanning and returning the root plate are carried out manually. By preference, the steps of retrieving, scanning and returning the root plate are carried out by a robot. This permits reducing the operational cost while allowing for the continuous execution of the said steps.

The invention is further described by the following non-limiting examples which further illustrate the invention, and are not intended to, nor should they be interpreted to, limit the scope of the invention defined by the appended claims.

### EXAMPLES AND/OR DESCRIPTION OF FIGURES

With as a goal illustrating better the properties of the invention the following presents, as an example and limiting in no way other potential applications, a description of preferred embodiments of the invention, wherein:

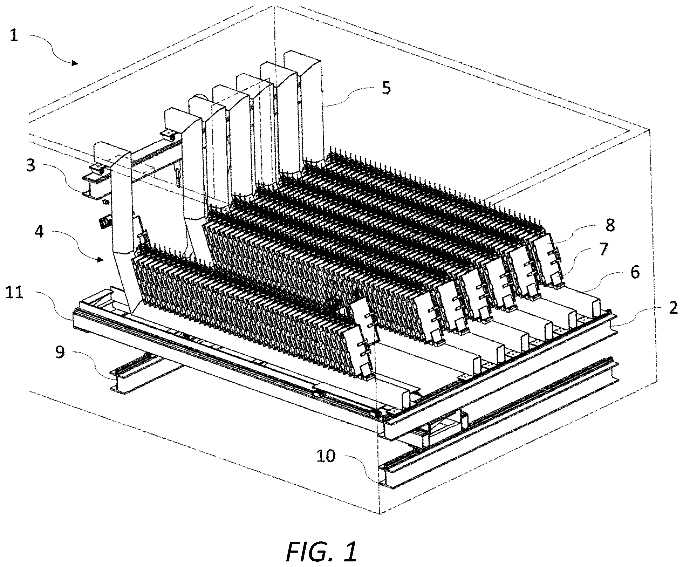

**FIG. 1** shows the device for storage, development and observation of plant roots **1.** The figure shows a first guide element **2** and a second guide element **3,** which guide elements support a plurality of movable shelves **4.** Each of which movable shelves **4** is shown comprising a vertical segment **5** and a horizontal segment **6,** each of which horizontal segments **6** further comprises a plurality of support elements rigidly attached and disposed along the length of said horizontal element **6.** Each of the support elements **7** are further shown supporting an inclined root plate **8.** A third guide element **9** and a fourth guide element **10** are shown supporting the movable access platform **11.**

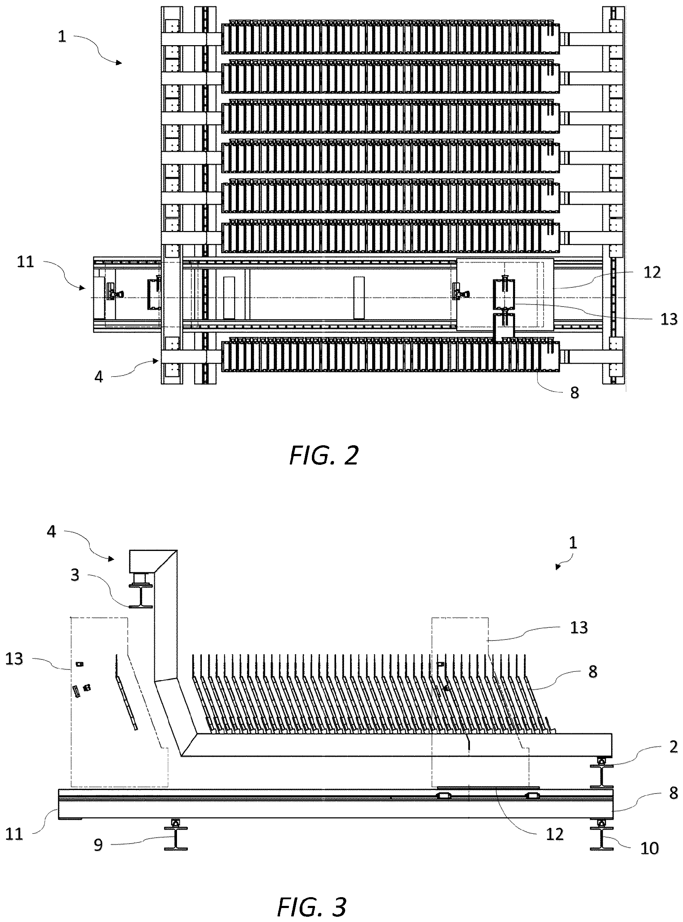

**FIG. 2** shows a top view of the device for storage, development and observation of plant roots **1** equipped with a robot **13.** The figure shows the access platform **11** further comprising a slidable platform **12** configured to travel along the length of said access platform **11.** Said slidable platform is shown equipped with a robot **13,** which robot **13** is shown accessing a root plate **8** from the first movable shelf **4.**

**FIG. 3** shows a side view of the device for storage, development and observation of plant roots **1** equipped with a robot **13.** The figure shows a first guide element **2** and a second guide element **3,** which guide elements are shown supporting a movable shelf **4.** Which movable shelf **4** is shown comprising a vertical segment **5** and a horizontal segment **6,** which horizontal segment **6** further comprises a plurality of support elements. Said support elements **7** are further shown supporting inclined root plates **8.** A third guide element **9** and a fourth guide element **10** are shown supporting movable frame **11,** which access platform **11** is shown comprising a robot **13** equipped slidable platform **12.** The figure further shows how the higher placement of the second guide element **3** advantageously permits unimpeded access of the robot **13** to the corridors adjacent to the movable shelves **4.**

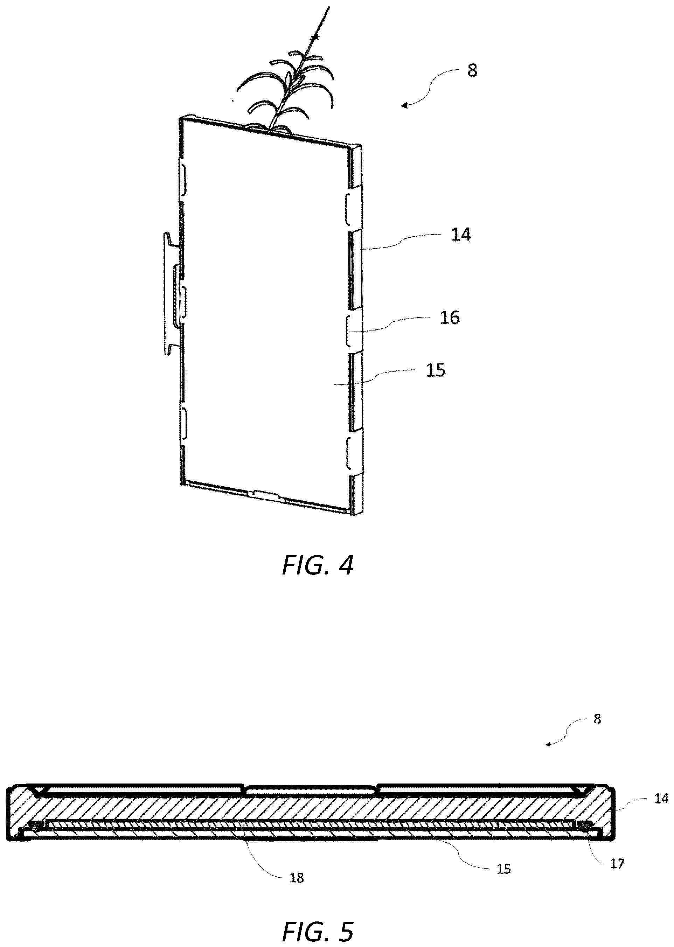

**FIG. 4** shows a first embodiment of a root plate **8.** The figure show a frame **14** having an open top and front, a transparent plate **15** placed against the front side of said frame **14.** Said transparent plate **15** being configured to close the open front of the frame **14** and create a cavity for substrate (not show), and a plurality of fastening means **16** bearing against the transparent plate **15** and the frame **14.**

**FIG. 5** shows a cross section of the first embodiment of a root plate **8.** The frame **14** is shown provided with a gasket **17** and transparent plate **15** bearing against said frame **14** and said gasket **17,** and thereby forming a cavity for substrate **18.**

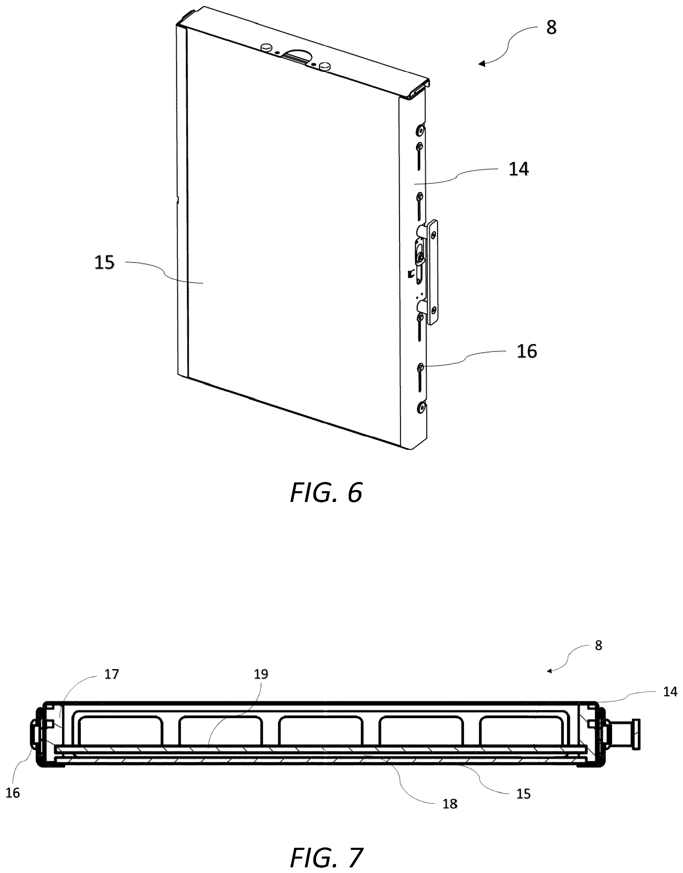

**FIG. 6** shows a second embodiment of a root plate **8.** The figure shown a frame **14** having an opening at the top and an open front, a transparent plate **15** placed against the front side of said frame **14.** Said transparent plate **15** being configured to close the open front of the frame **14** and create a cavity for substrate (not show), and a plurality of fastening means **16** bearing against the transparent plate **15** and the frame **14.**

**FIG. 7** shows a cross section of the second embodiment of a root plate **8.** The frame **14** is shown provided with a gasket **17** and transparent plate **15** bearing against said gasket **17,** and thereby forming a cavity for substrate **18.** Said frame **14** and the transparent plate **15** shown being held together by fastening means **16.** A detachable back of the cavity for substrate **19** is shown retained by a grove on the gasket **17.**

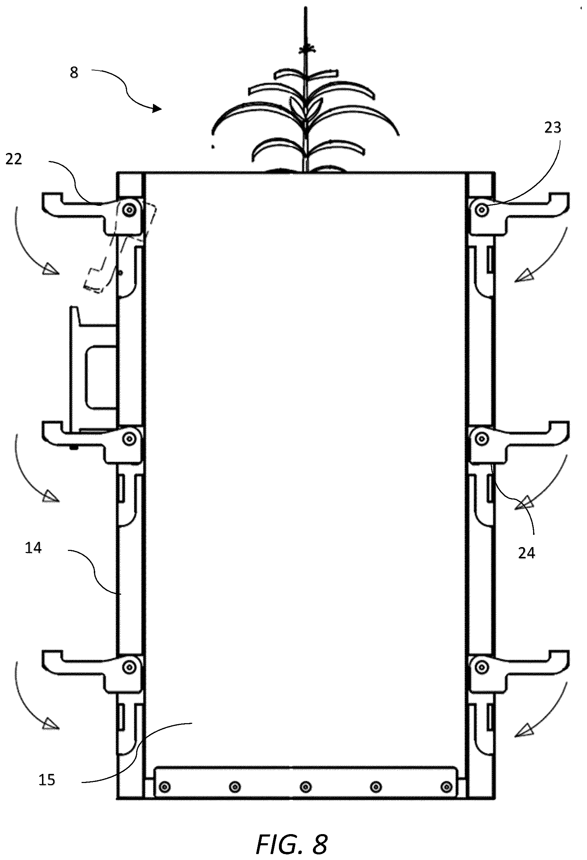

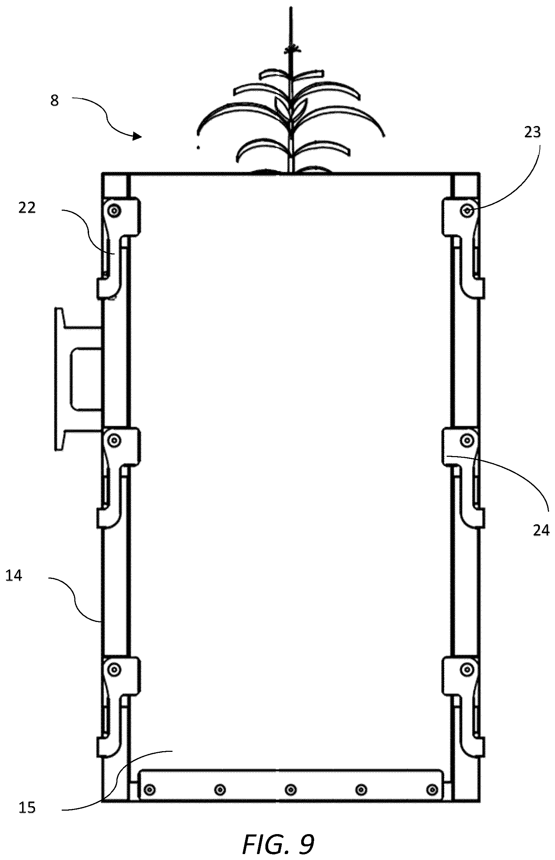

**FIG. 8** shows an embodiment of a root plate **8** equipped with a plurality of laterally pivotable clamps **22** in an open position. Each of said laterally pivotable clamps **22** are show rotate about their respective axis **23,** the axii **23** extending from the frame **14** of the root plate **8.** Each clamp **22** is shown further comprising a laterally extending tab **24** near the proximal end of the clamp **22** and adjacent to its axis **23.** The figure shows a frame **14** having an open top and front, a transparent plate **15** placed against the front side of said frame **14.** Said transparent plate **15** being configured to close the open front of the frame **14** and create a cavity for substrate (not show). **FIG. 9** shows an embodiment of a root plate **8** equipped with a plurality of laterally pivotable clamps **22** in an closed position. In this figure, the laterally extending tab **24** of each clamp **22** is shown overlapping and bearing against the transparent plate **15,** in this way keeping said transparent plate **15** held against the frame **14.**

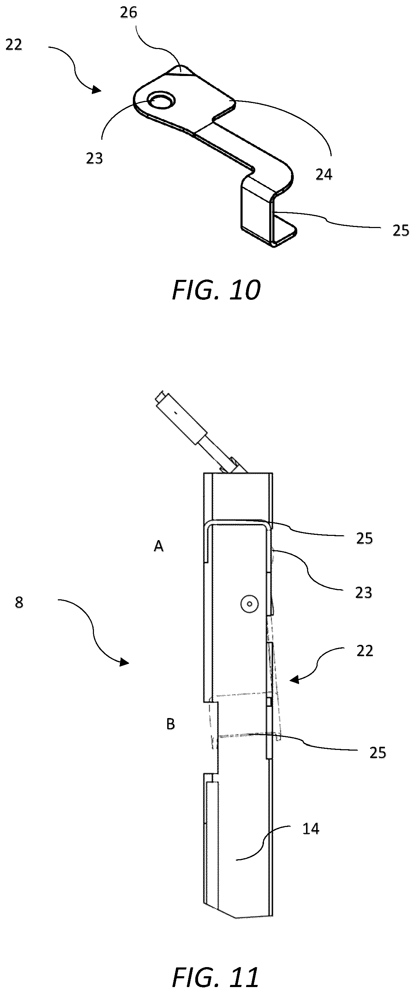

**FIG. 10** shows an embodiment of a laterally pivotable clamp **22.** The clamp **22** is shown comprising a laterally extending tab **24** near the proximal, end of the clamp **22.** The tab **24** is shown further comprising a raised corner **26.** A "U"-shaped section **25** is shown near at the distal end of the clamp **22,** the opening of said "U"-shaped section **25** being directed in the same direction as the tab **24.**

**FIG. 11** shows a detailed side view of a root plate **8** equipped with a laterally pivotable clamp **22.** The clamp **22** is shown in open position **A** and in closed position **B** (in ghost line), the clamp **22** rotating about axis **23.** In said closed position **B,** the section of the clamp **22** between the tab and the "U"-shaped section **25** is angled away from the frame **14** of the root plate **8,** this angel causing the one side of the "U"-shaped section **25** to press against the back side of the frame **14** and opposite to the transparent plate **15** (not shown).

### List of numbered items:

- 1: Device for storage, development and observation of plant roots
- 2: first guide element
- 3: second guide element
- 4: movable shelf
- 5: vertical segment of the shelf
- 6: horizontal segment of the shelf
- 7: support element
- 8: root plate
- 9: third guide element
- 10: fourth guide element
- 11: access platform
- 12: slidable platform
- 13: robot
- 14: frame
- 15: transparent plate
- 16: fastening means
- 17: gasket
- 18: cavity for substrate
- 19: detachable back of the cavity for substrate
- 22: laterally pivotable clamp
- 23: laterally pivotable clamp axis
- 24: laterally extending tab
- 25: "U"-shaped section
- 26: raised corner of laterally extending tab

It is supposed that the present invention is not restricted to any form of realization described previously and that some modifications can be added to the presented example of fabrication within the scope of the appended claims.

## Claims

1. Device (1) for storage, development and observation of plant roots comprising:
a. a first guide structure comprising a first and a second longitudinal guide elements (2, 3), said first guide element (2) being placed substantially parallel to said second guide element (3);
b. a plurality of movable shelves (4), each of said movable shelves having a substantially vertical first segment (5) and a substantially horizontal second segment (6), said vertical segment being slidably connected to the first guide element, said second segment being slidably connected to the second guide element, and said second segment being further equipped with a plurality of longitudinally disposed support elements (7) configured to accept and hold root plates (8);
c. a plurality of root plates (8) configured to hold a volume of substrate and at least one plant;
d. a third and fourth lower longitudinal guide elements (9, 10) located parallel to each other and to the first and second longitudinal guide elements, said third and fourth longitudinal guide elements being located at a lower level than said first and second longitudinal elements; and
e. an access platform (11) having a first and second end, said first end being slidably connected to the third longitudinal guide element, and said second end being slidably connected to the fourth longitudinal guide element, said platform being configured to slide along the length of said third and second longitudinal guide elements, and further comprising a slidable platform (12) configured to slide along the length of the access platform; wherein, the access platform (11) is configured to laterally displace movable shelves (4) in order to create access corridors next to any movable shelves, the slidable platform (12) is further equipped with a robot (13) configured move and scan root plates (8).

2. Device for storage, development and observation of plant roots according to claim 1, **characterized in that**, the access platform is driven.

3. Device for storage, development and observation of plant roots according to any claim 1 to claim 2, **characterized in that**, the slidable platform is configured to allow operators to access root plates stored in any movable shelf in the device.

4. Device for storage, development and observation of plant roots according to any claim 1 to claim 3, **characterized in that**, the support elements are oriented diagonally relative to both the horizontal plane and the longitudinal axis of the second segment of the movable shelf to which said support elements are rigidly attached.

5. Device for storage, development and observation of plant roots according to any claim 1 to claim 4, **characterized in that**, each root plate comprises a box frame (14) having an open top and front, a gasket (17) placed around the perimeter of said open front, a transparent plate (15) placed against the front side of said frame and bearing against said gasket, said transparent plate being configured to close the open front of the frame and create a cavity (18) for substrate, and a plurality of fastening means (16) bearing against the transparent plate and the frame.

6. Device for storage, development and observation of plant roots according to claim 5, **characterized in that**, the back side (19) of the cavity for substrate is detachable.

7. Device for storage, development and observation of plant roots according to claim 5 to claim 6, **characterized in that**, the frame has a plurality of attachment positions configured to receive and retain the detachable back of the cavity for substrate.

8. Device for storage, development and observation of plant roots according to any of the previous claims 5 to claim 7, **characterized in that**, the fastening means are laterally pivotable clamps (22).

9. Device for storage, development and observation of plant roots according to previous claim 8, **characterized in that**, the laterally pivotable clamps rotate about an axis (23) disposed to the frame.

10. Device for storage, development and observation of plant roots according to any claim 8 to claim 9, **characterized in that**, the laterally pivotable clamps have a laterally extending tab (24) near the proximal end to the clamp.

11. Device for storage, development and observation of plant roots according to any previous claim 8 to claim 10, **characterized in that**, the laterally pivotable clamps have a "U"-shaped section (25) near its distal end, the open channel of said section being directed in the same direction as the laterally extending tab.

12. Method of scanning a root plate (8) comprising the steps of:
a. Aligning an access platform (11) with a movable shelf (4) containing the root plate;
b. Creating an access corridor adjacent to said movable shelf;
c. Moving a slidable platform (12) along the access platform until aligned with the root plate;
d. Retrieving the root plate;
e. Scanning the root plate;
f. Returning the root plate.

13. Method of scanning a root plate according to claim 12, **characterized in that**, the access platform (11) creates access corridors by pushing the movable shelves (4).

14. Method of scanning a root plate according to claim 12 and claim 13, **characterized in that**, the steps of retrieving, scanning and returning the root plate (8) are carried out manually.

15. Method of scanning a root plate according to claim 12 and claim 13, **characterized in that**, the steps of retrieving, scanning and returning the root plate (8) are carried out by a robot (13).

## Patentansprüche

1. Vorrichtung (1) zur Verwahrung, Entwicklung und Beobachtung von Pflanzenwurzeln, Folgendes umfassend:
a. eine erste Führungsstruktur, die ein erstes und ein zweites längliches Führungselement (2, 3) umfasst, wobei das erste Führungselement (2) im Westlichen parallel zu dem zweiten Führungselement (3) platziert ist,
b. mehrere bewegliche Gestelle (4), wobei jedes der beweglichen Gestelle ein im Wesentlichen vertikales erstes Segment (5) und ein im Wesentlichen horizontales zweites Segment (6) aufweist, wobei das vertikale Segment gleitfähig mit dem ersten Führungselement verbunden ist, das zweite Segment gleitfähig mit dem zweiten Führungselement verbunden ist und das zweite Segment ferner mit mehreren in Längsrichtung angeordneten Stützelementen (7) versehen ist, die dafür gestaltet sind, Wurzelplatten (8) aufzunehmen und zu halten,
c. mehrere Wurzelplatten (8), die dafür gestaltet sind, ein Volumen eines Substrats und mindestens eine Pflanze zu halten,
d. ein drittes und ein viertes, unteres längliches Führungselement (9, 10), die parallel zueinander und zu dem ersten und dem zweiten länglichen Führungselement angeordnet sind, wobei das dritte und das vierte Führungselement auf einem tieferen Niveau angeordnet sind als das erste und das zweite längliche Element, und
e. eine Zugangsplattform (11) mit einem ersten und einem zweiten Ende, wobei das erste Ende gleitfähig mit dem dritten länglichen Führungselement verbunden ist und das zweite Ende gleitfähig mit dem vierten länglichen Führungselement verbunden ist, die Plattform dafür gestaltet ist, entlang der Länge des dritten und des zweiten länglichen Führungselements zu gleiten, und ferner eine gleitfähige Plattform (12) umfassend, die dafür gestaltet ist, entlang der Länge der Zugangsplattform zu gleiten,
wobei die Zugangsplattform dafür gestaltet ist, die beweglichen Gestelle (4) seitlich zu verschieben, um Zugangskorridore neben jedem beweglichen Gestell zu erzeugen, wobei die gleitfähige Plattform (12) ferner mit einem Roboter (13) versehen ist, der dafür gestaltet ist, Wurzelplatten (8) zu bewegen und zu scannen.

2. Vorrichtung zur Verwahrung, Entwicklung und Beobachtung von Pflanzenwurzeln nach Anspruch 1, **dadurch gekennzeichnet, dass** die Zugangsplattform angetrieben ist.

3. Vorrichtung zur Verwahrung, Entwicklung und Beobachtung von Pflanzenwurzeln nach Anspruch 1 bis Anspruch 2, **dadurch gekennzeichnet, dass** die gleitfähige Plattform dafür gestaltet ist, Bedienungspersonal den Zugang zu Wurzelplatten zu ermöglichen, die in einem beliebigen beweglichen Gestell in der Vorrichtung verwahrt werden.

4. Vorrichtung zur Verwahrung, Entwicklung und Beobachtung von Pflanzenwurzeln nach Anspruch 1 bis Anspruch 3, **dadurch gekennzeichnet, dass** die Stützelemente im Verhältnis zu sowohl der horizontalen Ebene als auch der Längsachse des zweiten Segments des beweglichen Gestells, an dem die Stützelemente starr angebracht sind, diagonal ausgerichtet sind.

5. Vorrichtung zur Verwahrung, Entwicklung und Beobachtung von Pflanzenwurzeln nach Anspruch 1 bis Anspruch 4, **dadurch gekennzeichnet, dass** jede Wurzelplatte einen Kastenrahmen (14) mit einer offenen Ober- und einer offenen Vorderseite umfasst, eine Dichtung (17) rings um den Umfang der offenen Vorderseite platziert ist, eine transparente Platte (15) an der Vorderseite des Rahmens und an der Dichtung anliegend platziert ist, wobei die transparente Platte dafür gestaltet ist, die offene Vorderseite des Rahmens zu verschließen und einen Hohlraum (18) für Substrat zu erzeugen, und mehrere Befestigungsmittel (16) an der transparenten Platte und dem Rahmen anliegen.

6. Vorrichtung zur Verwahrung, Entwicklung und Beobachtung von Pflanzenwurzeln nach Anspruch 5, **dadurch gekennzeichnet, dass** die Rückseite (19) des Hohlraums für Substrat abnehmbar ist.

7. Vorrichtung zur Verwahrung, Entwicklung und Beobachtung von Pflanzenwurzeln nach Anspruch 5 bis Anspruch 6, **dadurch gekennzeichnet, dass** der Rahmen mehrere Anbringungspositionen aufweist, die dafür gestaltet sind, die abnehmbare Rückseite des Hohlraums für Substrat aufzunehmen und zu halten.

8. Vorrichtung zur Verwahrung, Entwicklung und Beobachtung von Pflanzenwurzeln nach einem der vorhergehenden Ansprüche 5 bis 7, **dadurch gekennzeichnet, dass** die Befestigungsmittel seitlich schwenkbare Klemmen (22) sind.

9. Vorrichtung zur Verwahrung, Entwicklung und Beobachtung von Pflanzenwurzeln nach dem vorhergehenden Anspruch 8, **dadurch gekennzeichnet, dass** sich die seitlich schwenkbaren Klemmen um eine Achse (23) drehen, die an dem Rahmen angeordnet ist.

10. Vorrichtung zur Verwahrung, Entwicklung und Beobachtung von Pflanzenwurzeln nach Anspruch 8 bis Anspruch 9, **dadurch gekennzeichnet, dass** die seitlich schwenkbaren Klemmen eine sich seitlich erstreckende Nase (24) nahe dem nahen Ende der Klemme aufweisen.

11. Vorrichtung zur Verwahrung, Entwicklung und Beobachtung von Pflanzenwurzeln nach Anspruch 8 bis Anspruch 10, **dadurch gekennzeichnet, dass** die seitlich schwenkbaren Klemmen einen U-förmigen Abschnitt (25) nahe ihrem fernen Ende aufweisen, wobei der offene Kanal des Abschnitts in die gleiche Richtung wie die sich seitlich erstreckende Nase ausgerichtet ist.

12. Verfahren zum Scannen einer Wurzelplatte (8), die folgenden Schritte umfassend:
a. Ausrichten einer Zugangsplattform (11) an einem beweglichen Gestell (4), das die Wurzelplatte enthält,
b. Erzeugen eines Zugangskorridors angrenzend an das bewegliche Gestell,
c. Bewegen einer gleitfähigen Plattform (12) entlang der Zugangsplattform, bis sie an der Wurzelplatte ausgerichtet ist,
d. Entnehmen der Wurzelplatte,
e. Scannen der Wurzelplatte,
f. Rückführen der Wurzelplatte.

13. Verfahren zum Scannen einer Wurzelplatte nach Anspruch 12, **dadurch gekennzeichnet, dass** die Zugangsplattform (11) durch Schieben der beweglichen Gestelle (4) Zugangskorridore erzeugt.

14. Verfahren zum Scannen einer Wurzelplatte nach Anspruch 12 und Anspruch 13, **dadurch gekennzeichnet, dass** die Schritte des Entnehmens, des Scannens und des Rückführens der Wurzelplatte (8) manuell ausgeführt werden.

15. Verfahren zum Scannen einer Wurzelplatte nach Anspruch 12 und Anspruch 13, **dadurch gekennzeichnet, dass** die Schritte des Entnehmens, des Scannens und des Rückführens der Wurzelplatte (8) durch einen Roboter (13) ausgeführt werden.

## Revendications

1. Dispositif (1) pour le stockage, le développement et l'observation de racines de plantes comprenant :
a. une première structure de guidage comprenant un premier et un deuxième élément de guidage longitudinaux (2, 3), ledit premier élément de guidage (2) étant placé sensiblement parallèlement audit deuxième élément de guidage (3) ;
b. une pluralité de tablettes mobiles (4), chacune desdites tablettes mobiles ayant un premier segment sensiblement vertical (5) et un second segment sensiblement horizontal (6), ledit segment vertical étant relié de manière coulissante au premier élément de guidage, ledit second segment étant relié de manière coulissante au deuxième élément de guidage, et ledit second segment étant en outre équipé d'une pluralité d'éléments de support disposés longitudinalement (7) et configurés pour accepter et maintenir des plaques de racines (8) ;
c. une pluralité de plaques de racines (8) configurées pour contenir un volume de substrat et au moins une plante ;
d. un troisième et un quatrième élément de guidage longitudinaux inférieurs (9, 10) situés parallèlement l'un à l'autre et aux premier et deuxième éléments de guidage longitudinaux, lesdits troisième et quatrième éléments de guidage longitudinaux étant situés à un niveau inférieur aux premier et deuxième éléments longitudinaux ; et
e. une plate-forme d'accès (11) possédant une première et une seconde extrémité, ladite première extrémité étant reliée de manière coulissante au troisième élément de guidage longitudinal, et ladite seconde extrémité étant reliée de manière coulissante au quatrième élément de guidage longitudinal, ladite plate-forme étant configurée pour glisser sur la longueur desdits troisième et deuxième éléments de guidage longitudinaux, et comprenant en outre une plate-forme coulissante (12) configurée pour glisser sur la longueur de la plate-forme d'accès ;
dans lequel la plate-forme d'accès est configurée pour déplacer latéralement des tablettes mobiles (4) afin de créer des couloirs d'accès à côté d'autres tablettes mobiles, la plate-forme coulissante (12) est en outre équipée d'un robot (13) configuré pour déplacer et scanner des plaques de racines (8).

2. Dispositif de stockage, de développement et d'observation de racines de plantes selon la revendication 1, **caractérisé en ce, que** la plate-forme d'accès est entraînée.

3. Dispositif de stockage, de développement et d'observation de racines de plantes selon l'une quelconque des revendications 1 à 2, **caractérisé en ce que**, la plate-forme coulissante est configurée pour permettre à des opérateurs d'accéder à des plaques de racines stockées dans n'importe quelle tablette mobile dans le dispositif.

4. Dispositif de stockage, de développement et d'observation de racines de plantes selon l'une quelconque des revendications 1 à 3, **caractérisé en ce que**, les éléments de support sont orientés en diagonale par rapport au plan horizontal et à l'axe longitudinal du second segment de la tablette mobile auquel lesdits éléments de support sont rigidement attachés.

5. Dispositif de stockage, de développement et d'observation de racines de plantes selon l'une quelconque des revendications 1 à 4, **caractérisé en ce que**, chaque plaque de racines comprend un cadre de boîte (14) ayant un dessus et un devant ouverts, un joint (17) placé autour du périmètre dudit devant ouvert, une plaque transparente (15) placée contre le côté avant dudit cadre et en appui contre ledit joint, ladite plaque transparente étant configurée pour fermer le devant ouvert du cadre et créer une cavité (18) pour le substrat, et une pluralité de moyens de fixation (16) en appui contre la plaque transparente et le cadre.

6. Dispositif de stockage, de développement et d'observation de racines de plantes selon la revendication 5, **caractérisé en ce que**, le côté arrière (19) de la cavité pour le substrat est amovible.

7. Dispositif de stockage, de développement et d'observation de racines de plantes selon la revendication 5 et la revendication 6, **caractérisé en ce que**, le cadre possède une pluralité de positions de fixation configurées pour recevoir et retenir l'arrière amovible de la cavité pour le substrat.

8. Dispositif de stockage, de développement et d'observation de racines de plantes selon l'une quelconque des revendications précédentes 5 à 7, **caractérisé en ce que**, les moyens de fixation sont des brides pivotant latéralement (22).

9. Dispositif de stockage, de développement et d'observation de racines de plantes selon la revendication précédente 8, **caractérisé en ce que**, les brides pivotant latéralement tournent autour d'un axe (23) disposé sur le cadre.

10. Dispositif de stockage, de développement et d'observation de racines de plantes selon l'une quelconque des revendications 8 et 9, **caractérisé en ce que**, les brides pivotant latéralement possèdent une languette s'étendant latéralement (24) près de l'extrémité proximale de la bride.

11. Dispositif de stockage, de développement et d'observation de racines de plantes selon l'une quelconque des revendications précédentes 8 à 10, **caractérisé en ce que**, les brides pivotant latéralement ont une section en forme de « U » (25) près de leur extrémité distale, le canal ouvert de ladite section étant orienté dans la même direction que la languette s'étendant latéralement.

12. Procédé de scannage d'une plaque de racines (8) comprenant les étapes consistant à :
a. aligner une plate-forme d'accès (11) avec une tablette mobile (4) contenant la plaque de racines ;
b. créer un couloir d'accès adjacent à ladite tablette mobile ;
c. déplacer une plate-forme coulissante (12) le long de la plate-forme d'accès jusqu'à ce qu'elle soit alignée avec la plaque de racines ;
d. récupérer la plaque de racines ;
e. scanner la plaque de racines ;
f. renvoyer la plaque de racines.

13. Procédé de scannage d'une plaque de racines selon la revendication 12, **caractérisé en ce que**, la plate-forme d'accès (11) crée des couloirs d'accès en poussant les tablettes mobiles (4).

14. Procédé de scannage d'une plaque de racines selon les revendications 12 et 13, **caractérisé en ce que**, les étapes de récupération, de scannage et de renvoi de la plaque de racines (8) sont effectuées manuellement.

15. Procédé de scannage d'une plaque de racines selon les revendications 12 et 13, **caractérisé en ce que**, les étapes de récupération, de scannage et de renvoi de la plaque de racines (8) sont effectuées par un robot (13).
